(19) Europäisches Patentamt
European Patent Office
Office européen des brevets

(11) **EP 3 045 890 A1**

(12) **EUROPÄISCHE PATENTANMELDUNG**

(43) Veröffentlichungstag:
**20.07.2016 Patentblatt 2016/29**

(51) Int Cl.:
**G01N 3/52** (2006.01)     E02D 1/02 (2006.01)

(21) Anmeldenummer: **15000097.4**

(22) Anmeldetag: **16.01.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Veterinärmedizinische Universität Wien**
**1210 Vienna (AT)**

(72) Erfinder:
• **Peham, Christian**
  **A-2540 Bad Vöslau (AT)**
• **Schramel, Johannes Peter**
  **A-8243 Pinggau (AT)**

(74) Vertreter: **Peham, Alois**
**c/o Siemens AG Österreich**
**Siemensstrasse 90**
**1210 Wien (AT)**

(54) **Vorrichtung zur Bestimmung der elastischen Eigenschaften von Oberflächen und Böden und Verfahren zum Betrieb der Vorrichtung**

(57)     Die Erfindung betrifft eine Vorrichtung zur Bestimmung der elastischen Eigenschaften von Oberflächen und Böden, bei der ein Fallkörper (1) mit zumindest einem Sensor (2A,2B) zur Erfassung von Beschleunigungswerten vorgesehen ist und bei der Rechenmittel (7) zur Bestimmung der Zeitdauer eines ersten freien Falles, der Zeitdauer zwischen aufeinander folgenden Bodenkontakten, der Kontaktzeiten mit dem Boden, der Zeit von einem Kontakt mit dem Boden bis zum folgenden lokalen Maximum der Beschleunigung, und dem absoluten Maximalwert der Beschleunigung vorgesehen sind.

Die Erfindung betrifft weiterhin ein Verfahren zum Betrieb der Vorrichtung.

Die Erfindung ermöglicht auf einfache Weise die Messung mechanischer Eigenschaften unterschiedlichster Materialien.

Fig.1

**Beschreibung**

Vorrichtung zur Bestimmung der elastischen Eigenschaften von Oberflächen und Böden und Verfahren zum Betrieb der Vorrichtung.

Die Erfindung betrifft eine Vorrichtung zur Bestimmung der elastischen Eigenschaften von Oberflächen und Böden und ein Verfahren zum Betrieb der Vorrichtung.

Die Bestimmung der mechanischen, insbesondere der elastischen Eigenschaften eines Bodens ist besonders bei Oberflächen, die zur Ausübung verschiedener Sportarten vorgesehen sind, von besonderer Bedeutung. Eine optimale Beschaffenheit des Bodens kann zu einer Verbesserung der sportlichen Leistungen führen und ist in manchen Regelwerken von Sportarten auch vorgeschrieben.

Dagegen kann eine ungünstige Beschaffenheit das Risiko von Verletzungen von Sehnen, Bändern und Gelenken erhöhen und zu Langzeitschäden des Bewegungsapparates führen, wenn die mechanischen Eigenschaften nicht innerhalb bestimmter Grenzen gehalten werden.

Auch bei Böden, die in Bereichen besonderer Gefährdung verwendet werden, wie zum Beispiel bei Kinderspielplätzen, ist die Kenntnis der Bodeneigenschaften von Bedeutung.

Eine regelmäßige Kontrolle durch den jeweiligen Betreiber und eine Anpassung der Wartungsarbeiten an individuelle Verhältnisse kann die Situation entscheidend verbessern.

Viele Testverfahren sind in Normen festgelegt die auch einer ständigen Weiterentwicklung unterliegen. Die darin beschriebenen Vorrichtungen sind meist teuer, nicht für die Anwendung durch den Betreiber geeignet, sondern Testinstituten vorbehalten die auch eine Interpretation der Ergebnisse vornehmen müssen.

Eine derartige Vorrichtung zur Bestimmung der mechanischen Eigenschaften von Böden wird in der US 5,736,631A offenbart. Die in der Schrift dargestellte Vorrichtung besteht aus einem Führungsrohr mit darin befindlichem Fallkörper mit daran befestigtem Accelerometer, einer Signalaufbereitung, sowie einem Computer zur Datenauswertung und Speicherung. Das Gerät analysiert die Beschleunigungswerte die durch den Aufprall des Fallkörpers einer bestimmten Form und Masse aus einer vorgegebenen Höhe entstehen.

Eine ähnliche Vorrichtung wird in der US 7,243,526 B2 beschrieben. Der Fallkörper hat eine sphärische Form und neben einem Beschleunigungssensor auch einen Sensor zur Messung der Aufprallgeschwindigkeit.

Nach der US 6,925,858 B2 werden bei einer Vorrichtung der genannten Art zwei Accelerometer verwendet, wobei ein erstes Accelerometer ein zweites Accelerometer erst bei Bodenkontakt des Fallkörpers einschaltet, um so die zu verarbeitende Datenmenge zu reduzieren.

Aufgabe der Erfindung ist es ein vereinfachtes Verfahren und eine Vorrichtung zur Messung von mechanischen Eigenschaften von Böden und Oberflächen bereitzustellen.

Diese Aufgabe wird gelöst mit einer Vorrichtung gemäß Anspruch 1 und einem Verfahren gemäß Anspruch 10.

Die Erfindung ermöglicht auf einfache Weise die Messung mechanischer Eigenschaften unterschiedlichster Materialien. Die Vorrichtung ist einfach zu transportieren und kann daher vor Ort zum Einsatz kommen.

Vorteilhafte Ausgestaltungen ergeben sich aus den Unteransprüchen.

Die Erfindung wird anhand von in den Figuren dargestellten Ausführungsbeispielen näher erläutert. Es zeigen beispielhaft:

> Fig. 1 eine schematische Darstellung der wesentlichen Systemkomponenten;
> Fig. 2 den zeitlichen Verlauf der Position des Fallkörpers sowie die entsprechenden Sensor Signale und
> Fig. 3 eine weitere vorteilhafte Ausführungsform.

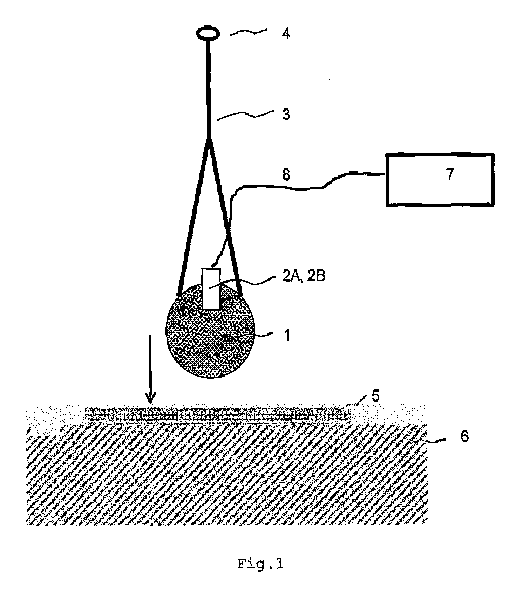

Die Vorrichtung nach Fig. 1 umfasst einen Fallkörper 1, der bei dem gegenständlichen Ausführungsbeispiel eine Kugelform aufweist.

Grundsätzlich kann der Fallkörper 1 auch eine andere, dem jeweiligen Anwendungsfall angepasste Form aufweisen, wie beispielsweise die Form eines Fußes, eines Hufes, einer Birne oder anderer Früchte. An dem Fallkörper 1 sind in einem Gehäuse ein erster und ein zweiter Sensor (Accelerometer) 2A, 2B mit unterschiedlicher Empfindlichkeit zur Bestimmung von Beschleunigungswerten befestigt.

Der erste Sensor 2A weist beispielsweise einen Messbereich von etwa +/- zwei G auf und ermöglicht die sensitive Detektion des freien Falls (null G) des Fallkörpers 1. Der zweite Sensor 2B weist beispielsweise einen Messbereich bis etwa zweihundert G auf, wobei dieser Messbereich auf den jeweiligen Anwendungsfall abgestimmt sein kann, der durch die Härte der zu untersuchenden Oberfläche 5 und der Masse und Fallhöhe des Fallkörpers 1 bestimmt ist.

Mittels zweiten Sensors 2B werden der Verlauf und der Spitzenwert der Beschleunigung gemessen, welcher beim Aufprall des Fallkörpers 1 auf die zu untersuchende Oberfläche 5 entsteht. Über Verbindungsmittel 8, welche als Kabel oder drahtlos ausgeführt sein können, werden die Signale und gegebenenfalls die Energieversorgung der Sensoren 2A, 2B auf einen Computer als Rechenmittel 7 übertragen. An einer Haltevorrichtung 3, die den Fallkörper 1 und die Sensoren 2A, 2B in einer aufrechten Position hält, ist ein Griff mit einer Auslösevorrichtung 4 befestigt. Aufgabe der Auslösevorrichtung 4 ist es, den freien Fall des Fallkörpers 1 mit den daran befestigten Sensoren 2A, 2B ohne Aufbringung zusätzlicher Kräfte zu starten.

Zur Messung einer Oberfläche 5 oder eines Bodens 6 wird der Fallkörper 1 vorzugsweise in einem Abstand von einigen Zentimetern bis etwa einem Meter je nach der gewünschten Aufprallgeschwindigkeit und Aufprallenergie in Ruhe gehalten und mit der Auslösevorrichtung 4 der freie Fall ausgelöst.

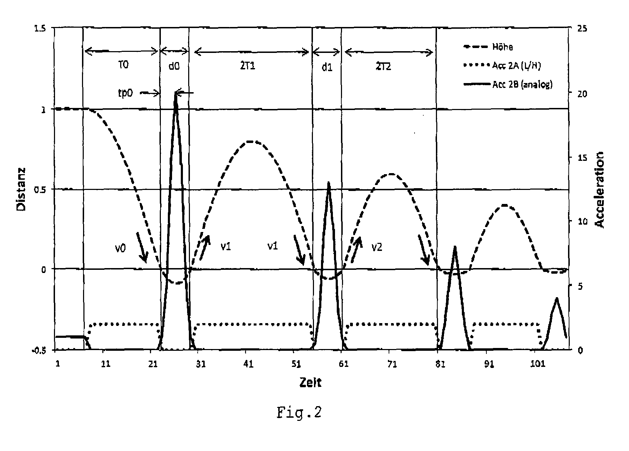

Dadurch ergeben sich die in Fig. 2 schematisch dargestellte Signalverläufe der Sensorausgänge über der Zeit aus welchen mittels Rechenmittel 7 die Parameter der Bodeneigenschaften berechnet werden können.

Der zeitliche Verlauf des vertikalen Abstandes zwischen der Oberfläche des Fallkörpers 1 und der zu testenden Oberfläche 5 wird durch die strichlierte Linie *Höhe* dargestellt.

Im Zeitpunkt 0 befindet sich der Fallkörper 1 in konstantem Abstand von der Oberfläche 5 in Ruhe. Nach dem Aktivieren des Auslösemechanismus 4 fällt der Fallkörper 1 beschleunigt in freiem Fall während der Zeitspanne T0 zu Boden. Beide Sensoren 2A, 2B zeigen dabei null G Beschleunigung an.

Das Signal des empfindlicheren ersten Sensors 2A wird zur Detektion der Zeitspanne T0 herangezogen und wechselt in dieser Zeit den logischen Pegel des Ausgangssignals, hier von LOW auf HIGH wie in der punktierten Linie *Acc 2A* dargestellt. Am Ende des freien Falles erreicht der Fallkörper 1 die Geschwindigkeit v0, berührt die Oberfläche 5 und deformiert diese etwas. Dies ist durch negative Werte des Abstandes *Höhe* und durch einen raschen Anstieg des Signals *Acc2B* von Sensor 2B sowie den Wechsel des Ausgangssignales *Acc2A* von Sensor 2A auf LOW gekennzeichnet.

Der Spitzenwert der Beschleunigung wird nach Ablauf der Zeit tp0 erreicht. Durch den Kontakt des Fallkörper 1 mit der Oberfläche 5 während der Periode d0 erfährt der Fallkörper 1 einen Rückstoß und prallt von der Oberfläche 5 ab.

Da ein je nach den Eigenschaften der Oberfläche 5 mehr oder weniger großer Teil der Energie verloren gehz, ist die Geschwindigkeit des Abpralls v1 kleiner als v0. Der Fallkörper 1 erreicht daher nicht mehr die Ausgangshöhe und trifft nach der Zeit 2*T1 wieder auf die Oberfläche. Auch während der Phase 2*T1 zeigen beide Sensoren 2A und 2B null G an.

Wenn der Luftwiderstand vernachlässigt wird, dann können aus den Zeitintervallen T0 und T1 die Geschwindigkeiten v0 und v1 mit $g = 9.81\ \text{m/s}^2$

$$vi = g * Ti$$

berechnet werden.

Die Fallhöhe ergibt sich zu

$$H = g/2 * T0^2$$

Die Energierückgewinnung errechnet sich aus

$$ER = (T0/T1)^2$$

In der Literatur wird auch ein Restitutionskoeffizient CR beschrieben. Dieser entspricht der Quadratwurzel aus ER oder dem Quotient der Geschwindigkeiten v1/v0.

Die mittlere Federkonstante K der Oberfläche 5 kann mit

$$K = (G^2 * M)/T0^2$$

abgeschätzt werden wobei M die Masse des Fallkörpers 1 und G das x - fache der Erdbeschleunigung (Spitzenwert) bedeuten.

Zur Berechnung der Kraftreduktion ist die Federkonstante Kref des zu simulierenden (realen) Körpers der auf die Oberfläche prallt als Referenzwert erforderlich. Beispielsweise kann die Federkonstante der Ferse eines Menschen oder ein Schuh als Referenz herangezogen werden. Das Masse-Feder Modell wird entsprechend um eine zweite Feder in Serie zu der als erste Feder betrachtetem Boden erweitert. Die Kraftreduktion in Prozent errechnet sich zu

$$Fred = (100*Kref)/(K+Kref)$$

Mit Kref als der Federkonstante des zu simulierenden (realen) Körpers.

Die Eindringtiefe kann durch doppelte Integration der Beschleunigungskurve ermittelt werden. Da die Kurve jedoch näherungsweise einen dreieckförmigen Verlauf hat, kann die Eindringtiefe durch doppelte Integration unter Verwendung der Anfangsbedingungen aus den Zeitintervallen T0 und tp0 der Gravitationskonstante g und dem Spitzenwert der Beschleunigung G mit

$$x = tp0*g*(T0-G*tp0/6)$$

berechnet werden.

Die Resonanzfrequenz des gedämpften Masse - Feder Modells ergibt sich näherungsweise aus der Kontaktzeit d0 zu fr = 1/(2*d0)

Diese angeführten Parameter beschreiben umfassend die elastischen Eigenschaften eines Bodens beim Aufprall eines Fallkörpers 1 durch seine besondere Gestalt und Masse M mit der Geschwindigkeit v0.

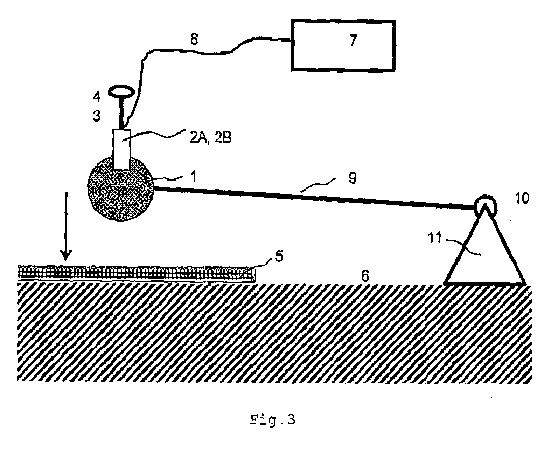

Fig. 3 zeigt eine weitere bevorzugte Ausführungsform, bei welcher der Fallkörper mit einem vergleichsweise massearmen Stab 9, der drehbar in einem Gelenk 10 auf der Halterung 11 befestigt ist, in aufrechter Position gehalten wird.

Dadurch wird eine Drehung der Fallkörpers 1 zwischen erstem und zweitem Aufprall besonders bei unebenen Oberflächen und kleiner Masse des Fallkörpers 1 verhindert. Der Stab 9 soll lang im Verhältnis zur Fallhöhe sein (> 10:1) um ein nahezu senkrechtes Auftreffen des Fallkörpers 1 auf die Oberfläche 5 zu gewährleisten.

Das Verfahren zum Betrieb der erfindungsgemäßen Vorrichtung zur Bestimmung der elastischen Eigenschaften von Böden setzt sich aus mehreren Einzelmessungen zusammen, die an einer Stelle oder nahe nebeneinander liegenden Stellen einer Probe durchgeführt werden. Letzteres ist besonders bei Proben die die ihre Eigenschaften durch den Aufprall irreversibel verändern wie z.B. Sandböden erforderlich.

Bei aufeinander folgenden Einzelmessungen wird die Fallhöhe in einem der Anwendung entsprechenden Bereich zufällig variiert um den Bereich der gewünschten Aufprallgeschwindigkeiten abzudecken. Dadurch werden nichtlineare Eigenschaften eines Bodens oder einer Oberfläche ebenfalls berücksichtigt und es reduziert die Streuung des Ergebnisses.

Danach wird der erhaltene Datensatz von Fehlmessungen nach festgelegten Kriterien bereinigt. Dann werden die Messwerte nach der Fallhöhe oder der Aufprallgeschwindigkeit geordnet, gegebenenfalls graphisch dargestellt und es wird eine Regressionskurve durch die Messpunkte sowie das Bestimmtheitsmaß bestimmt.

Aus der Formel der Regressionskurve können bei einem bestimmten Wert der Fallhöhe oder der Aufprallgeschwindigkeit die Parameter für Proben einer Serie einheitlich ermittelt und untereinander oder mit einer Referenz verglichen werden.

Die Erfindung ist in vorteilhafter Weise in allen Fällen anwendbar, in denen die Elastizität von Materialen bestimmt werden muss, um so beispielsweise zur Auswahl geeigneter Materialen für bestimmte Zwecke, oder zur Prozess-oder Qualitätskontrolle herangezogen werden zu können.

Insbesondere scheinen die folgenden Anwendungsfälle geeignet,

- die Qualitätskontrolle und das
- Design von Böden, zur Anwendung beispielsweise im Reit-sport, bei dem die Performance in unterschiedlichen Disziplinen wie z. B.: Dressur-, Spring-, Galopprenn-, Polo, Trabrenn- und Vielseitigkeitsbewerben von der Bodenbeschaffenheit abhängig ist und daher die Ermittlung der Materialeigenschaften (Bodenbescraffenheit) eine entscheidender 3edeutung hat.

Dies ist im Weiteren nicht nur in der Pferdehaltung, sondern allgemein in jeder Tierhaltung von Bedeutung, da die Auswahl des geeigneten Bodens der Abnützung des Bewegungsapparates entgegen wirken kann und das Wohlbefinden der Tiere fördert.

Dies gilt insbesondere bei der Haltung von Nutztieren (Geflügel, Rindern, Schafe, Schweine ua.), da nur gesunde Tiere die Basis für einwandfreie Produkte bilden. Z. B. profitieren auch Zootiere von einer optimalen Bodenbeschaffenheit die für eine artgerechte Haltung auch im Sinne der Tierschutzes anzustreben ist.

Die Bestimmung der Bodenbeschaffenheit spielt aber auch bei Sportarten wie Fußball, American Football, Rugby, Baseball, Bowling, Tennis, Handball, Faustball, Volleyball, Skispringen eine besondere Rolle, da ein ungeeigneter Boden (z. B. zu hart oder auch zu weich) das Verletzungsrisiko erhöhen kann und chronische Leiden verursachen kann.

An Orten zur körperlichen Ertüchtigung wie Turnsäle Fitnessstudios oder Kinderspielplätze sind stoßdämpfende Eigenschaften eines Bodens von Bedeutung um die Folgen eines Sturzes zu mindern.

Auch beim Test der Elastizität von Sportgeräten wie Bällen, Rackets (Tennis, Federball/Badmington, Squash), Sportschuhen, Handschuhen und Sätteln (Rad-, Motorrad und Reitsättel), Trampoline und Sprungbretter ist die Erfindung vorteilhaft einsetzbar.

Ein wichtiger Anwendungsbereich betrifft die Texturanalyse von Lebensmitteln.

Als Textur bezeichnet man die Beschaffenheit und Struktur eines Lebensmittels. Darin enthalten sind alle physikalischen Eigenschaften sowie wahrgenommene Eindrücke wie Berührung (einschließlich dem Mundgefühl), Aussehen und akustisches Verhalten. Dabei haben Größe, Form, Anzahl und Zellstruktur des Lebensmittels entscheidenden Einfluß auf die Textureigenschaften.

Beispiele für Textureigenschaften sind die Knackigkeit von Würstchen, die Festigkeit von Käse oder die Knusprigkeit von Waffeln.

Die instrumentelle Texturanalyse schließt subjektive Einflüsse auf die Prüfung aus. Die Vorteile der instrumentellen Texturanalyse

- Subjektive Tests werden durch objektive abgelöst
- Auch kleinste Abweichungen können erfasst und in Zahlen ausgedrückt werden.
- Durch die Standardisierung von Prüfmethoden (Werksnormen) können verschiedene Produktionsstätten dieselbe Produktqualität erzielen. Dies gilt besonders für stark automatisierte Produktionen sowie für Zulieferer von Halbfertigprodukten, Zutaten und Food Systemen. Durch eine verbesserte, konstantere Produktqualität werden Reklamationen von vornherein vermieden.
- Die Prüfungen liefern reproduzierbare Ergebnisse.
- Die Ergebnisse lassen sich anhand von Grafiken darstellen, interpretieren und einfach dokumentieren.
- Eine entsprechende Dokumentation der Produktqualität vereinfacht Verhandlungen zwischen Herstellern, Zulieferanten und Kunden.

Es ist auch denkbar, beispielsweise den Reifegrad von Lebensmitteln durch Bestimmung ihrer Elastizität zu ermitteln ; insbesondere bei

- Früchten wie Äpfel, Birnen, Kürbisse oder Melonen, um zu testen ob der Reifegrad für die Ernte oder den Verkauf bereits erreicht ist; bei
- Fleisch und Fleischwaren, ob die gewünschte Reife (bzw. Materialeigenschaften), z. B. durch Lagerung schon erreicht oder ggf. auch überschritten wurde. Auch können Fehler der Fleischqualität erkannt werden.

Ähnliche Qualitätskontrollen durch Bestimmung der Elastizität sind auch für Käse oder Backwaren denkbar.

Auch kann die Erfindung bei der Selektion von Züchtungen von Früchten oder Gemüsen, beispielsweise Tomaten oder bei der Herstellung künstlicher Gewebe aus Zellkulturen zur Messung elastischer Eigenschaften verwendet werden.

Vorteilhaft anwendbar ist die Erfindung auch bei der Überprüfung der Materialeigenschaften von Polstermöbeln und Matratzen aller Art. Dies kann vor allem bei extrem langen Belastungen wie speziellen Erkrankungen (Langes Liegen) oder auch bei Rollstühlen und bei Prothesen von großer Bedeutung sein. Zudem stellen sitzende Tätigkeiten auf vibrierenden Maschinen für den Bewegungsapparat wie z. B. Lastkraftwagen, Baumaschinen und Traktoren eine große Herausforderung dar. Eine Optimierung dieser Sitze und auch eine Kontrolle, ob sie ihre Eigenschaften beibehalten haben, stellt ein besonders vorteilhaftes Anwendungsbeispiel dieser Erfindung dar.

Eine mögliche Anwendung ergibt sich auch in der nicht invasiven Diagnostik und Früherkennung von Erkrankungen bei Mensch und Tier die zu einer Veränderung der Elastizität der Haut, Bindegewebe oder der Muskulatur führen.

Diese Anwendung benutzt vorteilhafterweise Fallkörper 1 mit kleinen Abmessungen. Naturgemäß müssen eingebaute Sensoren 2A und 2B möglichst klein gehalten werden und sind vorzugsweise in einem Halbleiterchip integriert der auch eine erste Signalaufbereitung beispielsweise zur Detektion des freien Falles enthalten kann.

Einen weiteren Anwendungsfall stellt die Überprüfung von Schutzeinrichtungen für Körper und Körperteile wie z.B.: von Knie- und Armschonern, von Kopfschützern, Protektoren usw. dar, ob sie den Anforderungen genügen.

Denkbar ist auch der Einsatz der Erfindung zur Überprüfung von Materialien wie Kunststoffen wie z.B. Reifen, ob sie durch Alterung oder Umwelteinflüsse, ihre ursprünglichen Eigenschaften eingebüßt haben oder für Verpackungsmaterial, welches empfindliche Geräte vor Erschütterungen beim Transport schützen soll.

Bezugszeichenliste

| 1 | Fallkörper |
| 2A,23 | Sensor (Accelerometer) |
| 3 | Haltevorrichtung |
| 4 | Auslösevorrichtung |
| 5 | Oberfläche |
| 6 | Boden |
| 7 | Rechenmittel |
| 8 | Verbindung |
| 9 | Stab |
| 10 | Gelenk |
| 11 | Halterung |
| Höhe | zeitlicher Verlauf des vertikalen Abstandes |
| Acc 2A | zeitlicher Verlauf des Ausgangssignales des ersten Sensors 2A |
| Acc 2B | zeitlicher Verlauf des Ausgangssignales des zweiten Sensors 2B |

**Patentansprüche**

1. Vorrichtung zur Bestimmung mechanischer insbesondere elastischer Eigenschaften von Oberflächen oder Böden, **dadurch gekennzeichnet, dass** ein Fallkörper (1) mit zumindest einem Sensor (2A,2B) zur Erfassung von Beschleunigungswerten vorgesehen ist und **dass** Rechenmittel (7) zur Bestimmung der Zeitdauer eines ersten freien Falles, der Zeitdauer zwischen aufeinander folgenden Bodenkontakten, der Kontaktzeiten mit dem Boden, der Zeit von einem Kontakt mit dem Boden bis zum folgenden lokalen Maximum der Beschleunigung, und dem absoluten Maximalwert der Beschleunigung vorgesehen sind.

2. Vorrichtung nach Anspruch 1, **dadurch gekennzeichnet, dass** der Fallkörper (1) mit einer Halte- und Auslösevorrichtung (3,4) verbunden ist, die eine kraftfreie Trennung zur Auslösung eines freien Falles ermöglicht.

3. Vorrichtung nach Anspruch 1 oder 2, **dadurch gekennzeichnet, dass** Rechenmittel (7) zur Bestimmung der die mechanischen Eigenschaften der Oberfläche (5) oder des Bodens (6) beschreibenden Parameter aus den Zeitintervallen und der Masse des Fallkörpers (1) vorgesehen sind.

4. Vorrichtung nach einem der Ansprüche 1 bis 3, **dadurch gekennzeichnet, dass** die Form des Fallkörpers (1) und dessen Elastizität oder Oberflächeneigenschaften an die zu untersuchende Anwendung angepasst sind.

5. Vorrichtung nach einem der Ansprüche 1 bis 4, **da-**

**durch gekennzeichnet, dass** die Rechenmittel (7) in den Fallkörper (1) oder in die Sensoren 2A und 2B integriert sind.

6. Vorrichtung nach einem der Ansprüche 1 bis 5, **dadurch gekennzeichnet, dass** weitere Sensoren in dem Fallkörper (1) oder in dem Rechenmittel (7) für Temperatur, und/oder Luftfeuchte, und/oder Bodenfeuchte, und/oder Erdmagnetfeld und/oder GPS enthalten sind.

7. Vorrichtung nach Anspruch 1, **dadurch gekennzeichnet, dass** der Fallkörper (1) das zu untersuchende Objekt darstellt und **dass** der Fall auf eine harte Oberfläche durchgeführt wird.

8. Vorrichtung nach Anspruch 1-6, **dadurch gekennzeichnet, dass** die Sensoren (2A, 2B) und eine Signalaufbereitung in einem Halbleiterchip integriert sind.

9. Vorrichtung nach Anspruch 1, **dadurch gekennzeichnet, dass** der Fallkörper (1) an einem, drehbar in einem Gelenk (10) auf einer Halterung (11) gelagerten Stab (9) befestigt ist.

10. Verfahren zum Betrieb einer Vorrichtung nach einem der Ansprüche 1-9 mit folgenden Verfahrensschritten:

    - der Fallkörper (1) wird in den gewünschten Abstand zu der zu messenden Oberfläche (5) oder des zu messenden Bodens (6) gebracht;
    - das Rechenmittel (7) wird in einen aufnahmebereiten Zustand versetzt;
    - mittels Auslösevorrichtung (4) wird der freie Fall ausgelöst;
    - die Signalverläufe (Acc2A, Acc2B) nach Aufbereitung der Signale an den Ausgängen der Sensoren (2A, 2B) erfasst werden und
    - mittels Rechenmittel (7) die Parameter der Bodeneigenschaften berechnet und
    - mittels Rechenmittel (7) die Parameter optional in Bezug zu gespeicherten Sollwerten gebracht.

Fig.1

Fig.2

8

Fig.3

Europäisches
Patentamt

European
Patent Office

Office européen
des brevets

# EUROPÄISCHER RECHERCHENBERICHT

**Nummer der Anmeldung**

EP 15 00 0097

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 96/00379 A1 (HOGAN PAUL [US]) 4. Januar 1996 (1996-01-04) * Abbildung 2 * ----- | 1-10 | INV. G01N3/52 ADD. E02D1/02 |
| X | JP S61 90038 A (SANMITSUKU TSUSHO KK; EIKO SOKKI KK) 8. Mai 1986 (1986-05-08) * Zusammenfassung; Abbildung 1 * ----- | 1-10 | |
| A | EP 2 460 939 A1 (DOTOCEAN N V [BE]) 6. Juni 2012 (2012-06-06) * Absatz [0054]; Abbildung 1 * ----- | 1-10 | |

**RECHERCHIERTE SACHGEBIETE (IPC)**

E02D
G01N

Der vorliegende Recherchenbericht wurde für alle Patentansprüche erstellt

| Recherchenort | Abschlußdatum der Recherche | Prüfer |
|---|---|---|
| Den Haag | 8. Juli 2015 | Mauritz, Jakob |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 15 00 0097

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-07-2015

| Im Recherchenbericht angeführtes Patentdokument | Datum der Veröffentlichung | Mitglied(er) der Patentfamilie | | Datum der Veröffentlichung |
|---|---|---|---|---|
| WO 9600379 A1 | 04-01-1996 | AT | 189307 T | 15-02-2000 |
| | | AU | 2909395 A | 19-01-1996 |
| | | CA | 2193411 A1 | 04-01-1996 |
| | | DE | 69514804 D1 | 02-03-2000 |
| | | DE | 69514804 T2 | 15-06-2000 |
| | | EP | 0767901 A1 | 16-04-1997 |
| | | US | 5490411 A | 13-02-1996 |
| | | WO | 9600379 A1 | 04-01-1996 |
| JP S6190038 A | 08-05-1986 | KEINE | | |
| EP 2460939 A1 | 06-06-2012 | BE | 1020080 A5 | 02-04-2013 |
| | | EP | 2460939 A1 | 06-06-2012 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5736631 A
- US 7243526 B2
- US 6925858 B2